# EUROPÄISCHE PATENTSCHRIFT

(11) **EP 0 934 991 B1**
(45) Veröffentlichungstag und Bekanntmachung des Hinweises auf die Patenterteilung: **21.01.2004**
(21) Anmeldenummer: 99102417.5
(22) Anmeldetag: 08.02.1999
(51) Int. Cl.: C09K 3/10, C04B 24/28, C08L 95/00, E04B 1/66, C04B 41/48

(54) **Abdichtungssysteme**
Sealing systems
Systèmes d'étanchéité

(30) Priorität: 09.02.1998 DE 19805022
(43) Veröffentlichungstag der Anmeldung: 11.08.1999
(73) Patentinhaber: KÖSTER BAUCHEMIE GMBH, 26607 Aurich (DE)
(72) Erfinder: Wirringa, Uwe, Dr., c/o Köster Bauchemie, 26607 Aurich (DE); Köster,Johann J.,c/o Köster Bauchemie GmbH, 26607 Aurich (DE)
(74) Vertreter: Winkler, Andreas, Dr.

(56) Entgegenhaltungen:
- DE-A- 4 408 154
- GB-A- 1 286 408
- GB-A- 1 486 231
- GB-A- 2 188 937
- US-A- 3 980 597
- DATABASE WPI Section Ch, Week 9551 Derwent Publications Ltd., London, GB; Class A25, AN 95-400807 XP002105294 & JP 07 277857 A (SK KAKEN KK) , 24. Oktober 1995 -& PATENT ABSTRACTS OF JAPAN vol. 96, no. 2, 29. Februar 1996 & JP 07 277857 A (KAKEN), 24. Oktober 1995
- DATABASE WPI Section Ch, Week 9344 Derwent Publications Ltd., London, GB; Class A18, AN 93-348659 XP002105295 & JP 05 255656 A (NISSEN KAGAKU KK) , 5. Oktober 1993

## Beschreibung

Die Erfindung betrifft die Verwendung einer Zusammensetzung zur Flächenabdichtung von Bauwerken oder dergleichen gegen Witterungseinflüsse, insbesondere gegen das Eindringen von Wasser und die Verwendung eines hydrophilen Polyether-Polyurethan-Präpolymers zur Herstellung der Zusammensetzung.

Bauwerke werden gegen Witterungseinflüsse, vorwiegend gegen das Eindringen von Wasser, geschützt. Besonders im erdbedeckten Bereich ist ein Schutz vor Grundwasser und Erdfeuchtigkeit zwingend erforderlich.

Für die Abdichtung stehen eine Reihe von Materialien und Verfahren zur Verfügung, wie bspw. zementgebundene Putze und Dichtungsschlämme, bituminöse Anstriche und Beschichtungen z.B. US-A-3980597, Kunststoffanstriche, -beschichtungen und -bahnen, Tone, Lehme oder Bentonite.

Einige dieser Materialien und Systeme können auf feuchtem Untergrund aufgebracht werden, andere benötigen zwingend einen trockenen Untergrund. Die Einsatzzeiten für die letztgenannten Produkte sind äußerst gering, da die Bauteile im Erdreich selten völlig trocken sind. Außerdem muß die Abdichtung meist kurzfristig nach dem Mauern bzw. Betonieren der Bauteile ausgeführt werden, d.h. zu einem Zeitpunkt, wenn das Bauwerk noch viel Feuchtigkeit enthält. Aus diesem Grund sind feuchtigkeitsunempfindliche Abdichtungsmaterialien bevorzugt.

Es ist von Vorteil, wenn die Abdichtungsmaterialien eine kurze Abbindezeit besitzen. Manche Abdichtungsmaterialien benötigen Trocknungszeiten von einigen Stunden bis hin zu einigen Tagen. In dieser Zeit sind sie natürlich besonders gefährdet, z.B. durch zufällige mechanische Beschädigung, durch Regenwasser, durch aus dem Bau ablaufendes Wasser, durch starke Sonneneinstrahlung, Wind oder Frost. Eine schnelle Abbindung ist daher vorteilhaft. Je schneller das Abdichtungsmaterial abbindet, um so schneller kann der Bau fortgeführt werden, z.B. durch Anfüllen des Erdreiches.

Es ist ebenfalls erwünscht, daß ein Abdichtungsmaterial möglichst rißüberbrückend und damit elastisch oder plastisch ist.

Desweiteren ist es auch wichtig, daß das Abdichtungsmaterial umweltneutral ist, also weder das anstehende Grundwasser noch das Erdreich mit schädlichen Stoffen kontaminiert.

Alle obengenannten Kriterien zusammen werden von keinem bekannten Abdichtungsmaterial bzw. Abdichtungsverfahren zufriedenstellend erfüllt.

GB-A-2 188 937 beschreibt eine Zusammensetzung, die Zement und ein NCO funktionnelles, hydrophiler Polyether-Polyurethan Pröpolymer enthält, die Zur Abdichtung von Bauwerken gegen das Eindringen von wasser verwendet wird.

Der Erfindung liegt daher die Aufgabe zugrunde, ein Flächenabdichtungsmaterial zu verwenden bei dem alle obengenannten Kriterien zusammen erfüllt sind, das kostenmäßig im Rahmen der bisherigen Kosten liegt, das möglichst problemlos zu verarbeiten bzw. auszuführen ist und das eine dauerhafte Sicherheit gegen Feuchtigkeit und Wasser bietet.

Erfindungsgemäß wird diese Aufgabe durch die Verwendung einer, gattungsgemäßen Zusammensetzung erfüllt, die durch die folgenden Bestandteile gekennzeichnet ist:
a) ein sich durch Aufnahme oder Abgabe von Wasser verfestigender mörtel; und
b) ein NCO-funktionelles, hydrophiles Polyether-Polyurethan-Präpolymer.

In einer bevorzugten Ausführungsform der Erfindung ist der Mörtel Zementmörtel, wobei in diesem Falle als weitere Komponente Sand hinzugefügt werden kann.

In dem Verfahren zur Flächenabdichtung von Bauwerken oder dergleichen gegen Witterungseinflüsse, insbesondere gegen das Eindringen von Wasser, wird (werden) die erfindungsgemäße Zusammensetzung oder deren Komponenten nach Vermischung, entweder direkt oder nach Hinzufügen von Wasser, auf die entsprechenden Bereiche des Bauwerkes oder dergleichen aufgebracht.

Hydrophile Polyether-Polyurethan-Präpolymere - auch bekannt unter der Bezeichnung Polyurethan-Gele - wurden bisher bereits für die Injektion in undichte Bauwerke eingesetzt. Dabei wird das Material durch Druck in den oder durch den Baukörper gepreßt, um Feuchtigkeitskanäle, die die Undichtigkeit bewirken, abzudichten. Überraschenderweise ist nunmehr festgestellt worden, daß ein derartiges Polyurethan-Gel, das bisher grundsätzlich nur pur oder mit Wasser verdünnt verarbeitet worden ist, in Kombination mit einem sich durch Aufnahme oder Abgabe von Wasser verfestigenden Material zusätzliche überlegene Eigenschaften erhält.

Hydrophile Polyether-Polyurethan-Präpolymere, wie erfindungsgemäß eingesetzt, sind unter verschiedenen Markennamen kommerziell verfügbar, bspw. unter der Bezeichnung KB-PUR® GEL II von der Anmelderin. Hervorzuheben ist, daß nicht alle Polyurethan-Präpolymere einsetzbar sind. Wesentliche Punkte für die Anwendbarkeit sind, daß das entsprechende Präpolymer hydrophil, d.h. unter Bildung einer Emulsion oder einer Lösung leicht mit Wasser mischbar ist und daß es sich um ein Polyether-Polyurethan-Präpolymer handelt (andere Polyurethan-Präpolymere, wie bspw. Polyester-Polyurethan-Präpolymere sind nicht einsetzbar).

Im Fall der Vermischung des Polyurethan-Gels mit Mörtel, insbesondere Zementmörtel, zeigt die auf diese Weise hergestellte Zusammensetzung folgende überraschende neue Eigenschaften:
- sehr kurze Verarbeitungszeiten (ca. 3 Minuten) durch alkalische Katalyse des Polymerisationsprozesses
- schnelle Thixotropierung des Gemisches, was für eine Verarbeitung an senkrechten Flächen vorteilhaft ist
- frühe Wasserfestigkeit
- hohe Flexibilität
- hohe Elastizität
- hohes Rückstellvermögen
- Elastizität/Flexibilität auch bei niedrigen Temperaturen (< -20°C)
- Einbetten der Mörtelpartikel in eine ununterbrochene, chemisch vernetzte Polymermatrix
- Abbindung des Mörtel-Gel-Gemisches bei niedrigen Temperaturen
- Verfilmung der Kunststoffkomponente auch bei Temperaturen unter 0°C, was bei dispersionsgebundenen Baustoffen nicht möglich ist
- weitestgehende Unabhängigkeit der Verarbeitung von Witterungseinflüssen
- Vor- und Nacharbeiten, wie Vornässen des Untergrunds und Feuchthalten nach der Verarbeitung, können entfallen

Unter diesen Eigenschaften ist insbesondere auch das Erfüllen höchster Anforderungen an die Kälteelastizität hervorzuheben. Selbst bei Temperaturen unter -20°C ist noch eine sehr gute rißüberbrückende Eigenschaft gegeben. Die Materialcharakteristik ist auch bei solchen niedrigen Temperaturen - und obwohl das Material hauptsächlich aus mineralischen Komponenten besteht - derjenigen von Gummiprodukten ähnlich.

Die Verarbeitung kann beispielsweise durch 2- oder 3-Komponentenpumpen im Spritzverfahren erfolgen. Selbstverständlich sind auch andere in diesem Bereich bekannte Verfahren einsetzbar. Durch die schnelle Abbindung ist bereits wenige Minuten nach der Verarbeitung eine belastbare Abdichtungslage gegeben.

Es sei noch einmal hervorgehoben, daß das erfindungsgemäße Material die bisher eingesetzten Materialien - unter Beibehaltung von deren jeweiligen Eigenschaften - in folgenden Punkten übertrifft:
- Rißüberbrückung auch bei niedrigsten Temperaturen
- kein Elastizitätsverlust bis zu -20°C und darunter
- sehr frühe mechanische Belastbarkeit (ca. 30 Minuten, t = 20°C)
- Einlagerung anstehenden Wassers in die Polymermatrix unter Schichtdickenerhöhung
- keine Gefahr der Reemulgierung des Polymers, weil dieses frei von Emulgatoren und Tensiden ist, sowie wegen chemischer Vernetzung

Auch der Einsatz in zementgebundenen Mörtelsystemen, d.h. Mischungen aus Zement, Sand, Polyurethan-Gel und Wasser, bringt interessante Anwendungsaspekte. Fugen können z.B. mit diesem Mörtel elastisch abgedichtet werden. Die Vorteile liegen hier in der Anwendbarkeit an feuchten bis nassen Fugenflanken, in der einfachen Handhabung und auch im Bereich der Wirtschaftlichkeit. Für diese elastischen Mörtelsysteme werden sich den Fachleuten weitere vielfältige Anwendungsmöglichkeiten erschließen.

Die Erfindung wird numehr anhand der folgenden Beispiele näher erläutert werden.

### Beispiel 1: Gel/Mörtel-Systeme

Die Mischungsverhältnisse der beiden für derartige Systeme benötigten Komponenten liegen bei mindestens 1 Gew.-Teil Polyurethan-Gel auf 4 Gew.-Teilen Trockenmörtel, z.B. Zement. Zum Abbinden benötigtes Wasser wird in einem Bereich von 0,5 bis 3 Gew.-Teilen Wasser auf 1 Gew.-Teil Polyure-than-Gel zugegeben.

Die Mischungsverhältnisse können den jeweiligen Anwendungszwecken angepaßt werden, wobei insbesondere zwischen flächigen (z.B. Beschichtungen) und nicht-flächigen (z.B. Fugen) Anwendungen zu unterscheiden ist. Je nach Anwendungsfall kann auch eine unterschiedliche Kornfeinheit der Mörtelkomponente sinnvoll sein z.B. ein feineres Korn bei flächigen Anwendungen und ein gröberes Korn bei nicht-flächigen Anwendungen. Bei der Verwendung von Zementmörtel kann darüber hinaus auch noch eine Einstellung der Eigenschaften über den Zementgehalt erreicht werden.

Es ist darauf hinzuweisen, daß auf Seiten der Mörtelkomponente durchaus auch Baustellenmischungen verwendet werden können, die selbstverständlich dann dem jeweiligen Anwendungszweck angepaßt werden müßten.

Gel/Mörtelsysteme im Vergleich zu Mörtel/Dispersionsbaustoffen zeichnen sich durch eine erhöhte Druckfestigkeit, Zugfestigkeit, Reißdehnung und Rückstellvermögen aus. Sie sind für flächige und nicht-flächige Anwendungen geeignet und zeigen eine nicht-klebrige Oberfläche im ausreagierten, d.h. abgebundenen Zustand.

## Patentansprüche

1. Verwendung einer Zusammensetzung zur Flächenabdichtung von Bauwerken oder dergleichen gegen Witterungseinflüsse, insbesondere gegen das Eindringen von Wasser, wobei die Zusammensetzung folgende Bestandteile umfaßt:
a) einen sich durch Aufnahme oder Abgabe von Wasser verfestigenden Mörtel; und
b) ein NCO-funktionelles, hydrophiles Polyether-Polyurethan-Präpolymer.

2. Verwendung nach Anspruch 1, **dadurch gekennzeichnet, daß** der Mörtel Zementmörtel ist.

3. Verwendung nach Anspruch 1 oder 2, **dadurch gekennzeichnet, daß** der Zusammensetzung als weitere Komponente Sand hinzugefügt wird.

## Claims

1. Use of a composition for sealing the outside of buildings or the like against weathering, more particularly against penetration of water, the composition comprising the following constituents:
a) a mortar which solidifies by absorption or loss of water and
b) a hydrophilic polyether-polyurethane prepolymer containing NCO groups.

2. Use according to claim 1, **characterised in that** the mortar is cement mortar.

3. Use according to claim 1 or 2, **characterised in that** sand is added as an additional component to the composition.

## Revendications

1. Utilisation d'une composition pour l'étanchéité superficielle de constructions ou similaires contre les influences atmosphériques, en particulier contre les infiltrations d'eau, ladite composition comprenant les constituants suivants :
a) un mortier se consolidant par absorption ou rejet de l'eau ; et
b) un prépolymère de polyéther-polyuréthane hydrophile à fonctionnalité NCO.

2. Utilisation selon la revendication 1, **caractérisée en ce que** le mortier est un mortier de ciment.

3. Utilisation selon la revendication 1 ou 2, **caractérisée en ce que** du sable a été introduit comme composant supplémentaire de la composition.
